# EUROPEAN PATENT APPLICATION

(11) **EP 4 852 457 A1**
(43) Date of publication of application: **09.12.2026**
(21) Application number: 26180761.4
(22) Date of filing: 22.05.2026
(51) Int. Cl.: H04R 29/00, G01D 5/16, H04R 3/00, H04R 9/02, H04R 9/04

(54) **SPEAKER**

(30) Priority: 04.06.2025 JP 2025093774
(71) Applicant: Alps Alpine Co., Ltd., Tokyo 145-8501 (JP)
(72) Inventor: Uesugi, Haruki, Tokyo, 145-8501 (JP)
(74) Representative: Schmitt-Nilson Schraud Waibel Wohlfrom Patentanwälte Partnerschaft mbB

(57) **Abstract**

A speaker is provided and includes a vibrator including a diaphragm; a magnetic circuit including a magnet configured to drive the diaphragm; and a magnetic angle sensor attached to the vibrator and configured to detect an angle of magnetic flux leakage generated in the magnetic circuit.

## Description

The present disclosure relates to a speaker configured to detect the movement of a vibrator including a diaphragm with high accuracy using a magnetic sensor.

A speaker configured to perform feedback control by detecting the moving state of a vibrator including a diaphragm using a magnetic sensor (see, for example, JP2022-149259A and JP2022-178131A) is disclosed. The magnetic sensor (e.g., a GMR sensor, which stands for a giant magnetoresistance sensor) is configured to detect the angle of a magnetic flux. The magnetic sensor enables detection of displacement of the vibrator with high accuracy based on a change in the angle of a magnetic flux vector obtained by combining a magnetic flux from a fixed magnet forming a magnetic circuit and a magnetic flux from a movable magnet attached to the vibrator.

The present disclosure relates to a speaker according to the appended claims. Embodiments are disclosed in the dependent claims.

A speaker according to an aspect of the present disclosure includes: a vibrator including a diaphragm; a magnetic circuit including a magnet configured to drive the diaphragm; and a magnetic angle sensor attached to the vibrator and configured to detect an angle of magnetic flux leakage generated in the magnetic circuit.
FIG. 1 is a diagram schematically illustrating a positional relationship between a GMR sensor and first and second magnets.
FIG. 2 is a diagram illustrating the principle of displacement detection of a vibrator using the GMR sensor.
FIG. 3 is a schematic cross-sectional diagram of a conventional speaker.
FIG. 4 is a perspective diagram including a cross section in a Z direction of a speaker according to an embodiment of the present disclosure.
FIG. 5 is a cross-sectional diagram of an XZ plane passing through a center axis O of the speaker according to an embodiment of the present disclosure.
FIG. 6A is a diagram illustrating the principle of displacement detection using the GMR sensor according to an embodiment of the present disclosure, and a relationship between magnetic flux leakage and the GMR sensor when the GMR sensor relatively approaches the magnetic circuit.
FIG. 6B is a diagram schematically illustrating a magnetic flux vector passing through the XZ plane, which is the detection surface of the GMR sensor in the approaching state illustrated in FIG. 6A.
FIG. 6C is a diagram illustrating the principle of displacement detection using the GMR sensor according to an embodiment of the present disclosure, and a relationship between the magnetic flux leakage and the GMR sensor when the GMR sensor relatively moves away from the magnetic circuit.
FIG. 6D is a diagram schematically illustrating the magnetic flux vector passing through the XZ plane, which is the detection surface of the GMR sensor in the moved-away state illustrated in FIG. 6C.
FIG. 7 is a graph illustrating a simulation result of a displacement versus a magnetic angle (displacement-magnetic angle) obtained using a displacement detector of the present embodiments, in which the vertical axis indicates the displacement of the GMR sensor, and the horizontal axis indicates the magnetic angle.
FIG. 8 is a simulation result of a magnitude of the magnetic flux leakage corresponding to the displacement-magnetic angle illustrated in FIG. 7.

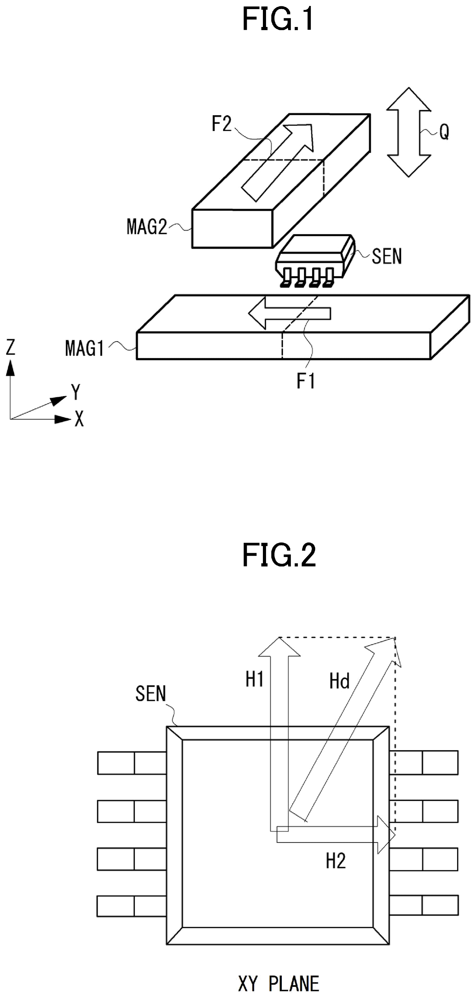

FIG. 1 is a diagram schematically illustrating a positional relationship between a GMR sensor and fixed/movable magnets, which are disposed in a conventional speaker. As illustrated in FIG. 1, the positions of a first magnet MAG1, forming a magnetic circuit, and a GMR sensor SEN are respectively fixed, and a second magnet MAG2 attached to a vibrator is movable to move in accordance with an amplitude Q of the vibrator. Also, the two magnets are disposed such that the direction of a magnetic field F1 of the first magnet MAG1 applied to the GMR sensor SEN is substantially orthogonal to the direction of a magnetic field F2 of the second magnet MAG2.

FIG. 2 is a diagram illustrating the principle of displacement detection of a vibrator using the GMR sensor. The GMR sensor SEN utilizes a GMR effect in which a resistance value changes by the effect of an external magnetic field. The GMR sensor SEN is bias-driven, for example, by a DC voltage or a DC current. When the resistance value is changed by the GMR effect caused by the external magnetic field, the GMR sensor SEN outputs a voltage or a current in accordance with the resistance change. As illustrated in FIG. 2, the GMR sensor SEN detects the angle of a resultant vector magnetic flux Hd obtained by combining a magnetic flux vector H1 from the first magnet MAG1 and a magnetic flux vector H2 from the second magnet MAG2 in an XY plane, which is a detection surface. Since the relative distance between the GMR sensor SEN and the first magnet MAG1 does not change, the magnetic flux vector H1 does not substantially change. Whereas, since the relative distance between the second magnet MAG2 and the GMR sensor SEN changes in accordance with the amplitude Q of the vibrator, the magnetic flux vector H2 changes accordingly. When the second magnet MAG2 approaches the GMR sensor SEN, the magnetic flux vector H2 increases, and when the second magnet MAG2 moves away from the GMR sensor SEN, the magnetic flux vector H2 decreases. This causes a change in the angle of the resultant vector Hd. The angle change of the resultant vector Hd corresponds to the displacement of the amplitude Q of the vibrator.

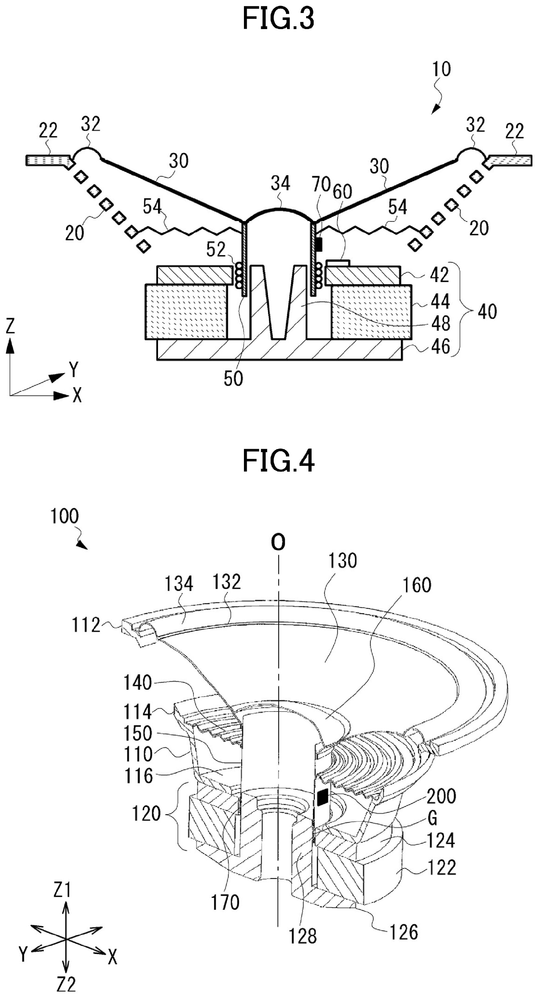

FIG. 3 is a schematic cross-sectional diagram of a conventional speaker using the GMR sensor. A speaker 10 includes a frame 20, a diaphragm 30, and a magnetic circuit 40. The diaphragm 30 is attached to one end 22 of the frame 20 via a hemispherical edge 32, and a dome-shaped center cap 34 is attached to the center of the diaphragm 30. The magnetic circuit 40 includes a ring-shaped top plate 42, a ring-shaped first magnet 44, a disk-shaped bottom plate 46, a center pole 48 projecting upward from the center of the bottom plate 46, a cylindrical bobbin 50 disposed outside the center pole 46, and a voice coil 52 wound around a peripheral portion of the bobbin 50. The bobbin 50 is connected to an intermediate portion of the frame 20 via a damper 54, and the upper end of the bobbin 50 is adhesively fixed to the rear surface of the diaphragm 30.

The GMR sensor 60 is fixed to the surface of the top plate 42 in the XY plane, and a second magnet 70 is fixed above the bobbin 50 in a magnetic gap. The magnetic field F1 in a radial direction of the top plate 42 generated by the first magnet 44 and the magnetic field F2 in a tangential direction of the bobbin 50 generated by the second magnet 70 are applied to the GMR sensor 60.

An assembly step of such a conventional speaker structure, in which the GMR sensor 60 and the second magnet 70 are disposed, is as follows. The first magnet 44 is magnetized before assembly of a vibrating system, followed by attaching the GMR sensor 60 and then the second magnet 70, which is previously magnetized and produced in a different step. In such an assembly step, the second magnet 70 needs to be previously magnetized in the different step. In addition, the magnetized second magnet 70 is not readily handled, resulting in reduced productivity. Further, the second magnet 70 dedicated to displacement detection of the vibrator is required, resulting in increased cost of a speaker.

It is an object of the present disclosure to provide a speaker that can address such problems, in particular increase production efficiency and reduce necessary cost.

A speaker according to an embodiment of the present disclosure has a function to monitor behaviors of a diaphragm in real time using a magnetic sensor. By enabling detection of the angle of magnetic flux leakage generated in the magnetic circuit using the magnetic angle sensor, a magnet dedicated to displacement detection of the vibrator is not necessary, thereby increasing production efficiency in the assembly step of the speaker and reducing the cost of the speaker. The drawings referred to in the description of the following embodiments include exaggerated representations for facilitating understanding of the present disclosure, and do not express the shapes or scales of an actual product.

Next, embodiments of the present disclosure will be described in detail with reference to the drawings. FIG. 4 is a perspective diagram including a cross section in a Z direction of a speaker to which embodiments of the present disclosure are applicable. In FIG. 4, a Z1-to-Z2 direction is a front-rear direction of a speaker 100, a Z1 direction is a front side (front surface), and a Z2 direction is a rear side. Also, FIG. 4 illustrates a center axis O extending in the front-rear direction (Z1-to-Z2 direction). A main portion of the speaker 100 has a structure that is substantially rotationally symmetric about the center axis O.

The speaker 100 includes a frame 110 formed of a non-magnetic material or a magnetic material. The frame 110 has a tapered shape with a diameter gradually increasing toward the front side, and a magnetic circuit 120 is fixed to the rear side of the frame 110 by means of adhesion, screwing, or the like.

The magnetic circuit 120 includes a magnet 122 configured to drive the speaker and having a shape of a ring centered on the center axis O, a ring-shaped top plate (opposing yoke) 124 bonded to the front side of the magnet 122, a back plate (rear yoke) 126 bonded to the rear side of the magnet 122, and a center pole (center yoke) 128 positioned inside the magnet 122 and the top plate 124 and extending toward the front side from the back plate 126. The top plate 124, the back plate 126, and the center pole 128 are formed of a magnetic material.

The center pole 128 has a cylindrical shape. A magnetic gap G is formed along a circumference centered on the center axis O between the outer peripheral surface of the center pole 128 and the inner peripheral surface of the top plate 124. In the magnetic circuit 120, a driving magnetic field generated by the magnet 122 crosses the magnetic gap G from the top plate 124, and flows through the center pole 128 and the back plate 126.

A cone-shaped diaphragm 130 is provided inside a front-side portion of the frame 110. A front-end peripheral portion 112 of the frame 110 and an outer peripheral end 132 of the diaphragm 130 are bonded via an elastically deformable edge 134. The edge 134 and the front-end peripheral portion 112 are adhesively fixed to each other, and the edge 134 and the outer peripheral end 132 are adhesively fixed to each other. An inner peripheral fixing portion 114 is formed on the inner surface of an intermediate portion of the frame 110. An end of an elastically deformable damper 140 having a corrugated cross section is adhesively fixed to the inner peripheral fixing portion 114. The magnetic circuit 120 is attached to a rear end 116 of the frame 110.

A bobbin 150 is provided inside the frame 110. The bobbin 150 has a cylindrical shape centered on the center axis O. The inner peripheral end of the diaphragm 130 is adhesively fixed to the outer peripheral surface of the bobbin 150, and the end of the damper 140 is adhesively fixed to the outer peripheral surface of the bobbin 150. A dome-shaped cap 160 is provided at the center of the diaphragm 130. The cap 160 covers a front-side opening of the bobbin 150. The peripheral portion of the cap 160 is adhesively fixed to the front surface of the diaphragm 130. A voice coil 170 is wound around the outer peripheral surface of the rear end of the bobbin 150. The voice coil 170 is located within the magnetic gap G of the magnetic circuit 120. The diaphragm 130 and the bobbin 150 are supported to be vibratable in the front-rear direction through elastic deformation of the edge 134 and the damper 140.

Further, the speaker 100 is provided with a displacement detector configured to detect the displacement of the diaphragm 130. The displacement detector includes a GMR sensor 200 as a magnetic angle sensor. The GMR sensor 200 is attached to the outer peripheral portion of the bobbin 150 to detect the angle of the magnetic flux leakage generated on the surface of the top plate 124 of the magnetic circuit 120.

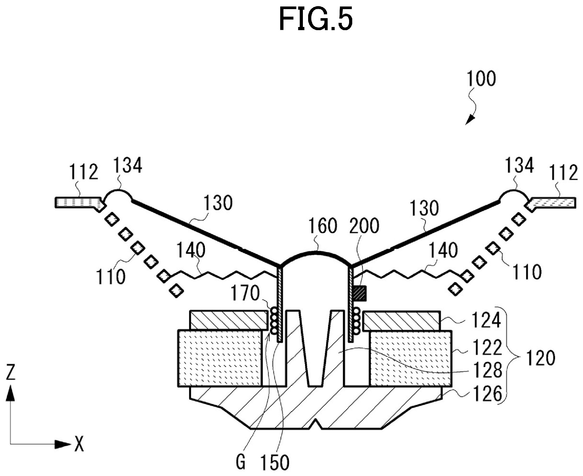

FIG. 5 is a cross-sectional diagram of an XZ plane of the speaker. As illustrated, the GMR sensor 200 is disposed at the outer peripheral portion of the bobbin 150 between the voice coil 170 and the damper 140. When the diaphragm 130 vibrates in the Z direction, the GMR sensor 200 vibrates along with the diaphragm 130, thereby changing the relative position between the GMR sensor 200 and the magnetic circuit 120. The detection surface of the GMR sensor 200 is aligned with the XZ plane such that the angle of the magnetic flux leakage generated on the surface of the magnetic circuit 120 in the XZ plane can be detected. Also, when the GMR sensor 200 moves away the farthest from the magnetic circuit 120, the GMR sensor 200 is disposed at a position where the magnetic flux having a predetermined magnitude or more can be detected. The GMR sensor 200 may be attached to the bobbin 150 via a printed circuit board (not shown). An electronic component configured to process a detection signal of the GMR sensor 200 may be mounted on the printed circuit board.

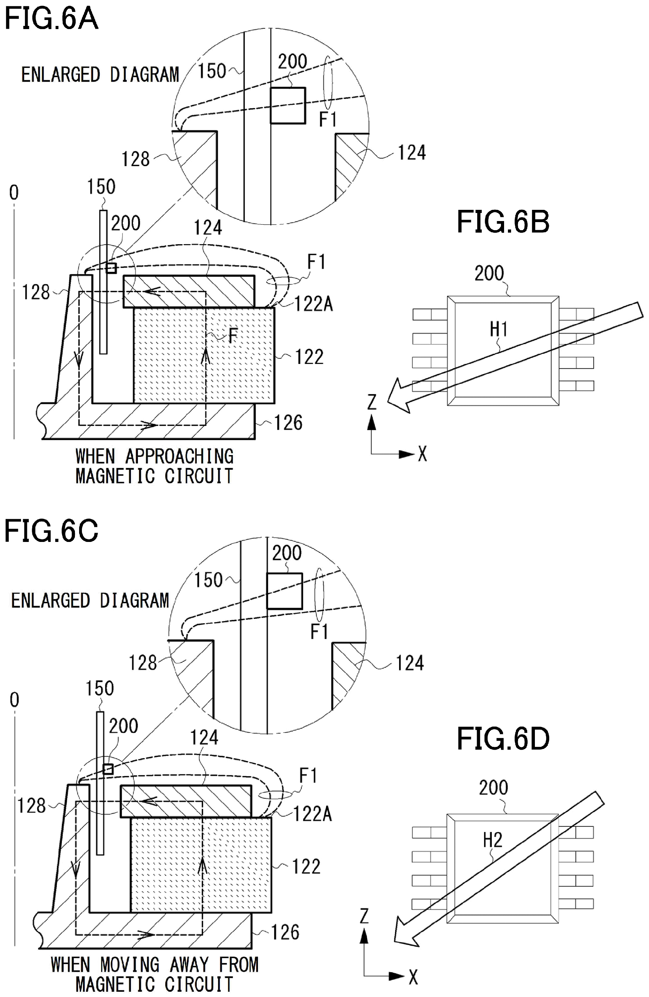

Next, the principle of displacement detection using the GMR sensor 200 of the present embodiments will be described. FIG. 6A is an XZ cross-sectional diagram of the right half with respect to the center axis O, and illustrates a state in which the GMR sensor 200 approaches the magnetic circuit 120. The magnet 122 forming the magnetic circuit 120 is magnetized in the Z direction. For example, the upper portion of the magnet 122 is magnetized to the N pole, and the lower portion of the magnet 122 is magnetized to the S pole. The ring-shaped top plate 124 substantially covers the upper surface of the magnet 122, and provides a path for effectively guiding the magnetic flux, generated by the magnet 122, to the center pole 128. The top plate 124 need not necessarily cover the entire surface of the magnet 122, and may be smaller than the outer diameter of the magnet 122. In this case, an outer peripheral surface 122A of the magnet 122 is exposed without being covered by the top plate 124.

A magnetic flux F flowing through the magnetic circuit 120 is in a closed loop. That is, the magnetic flux F generated from the N pole of the magnet 122 flows through the top plate 124, which is a yoke in the magnetic circuit 120, crosses the magnetic gap G and passes through the center pole 128 and the back plate 126, which are yokes, and flows to the S pole, which is an end point of the magnet 122. In practice, however, even if the yoke is formed of a material having a high magnetic permeability (e.g., iron or ferrite), a part of the magnetic flux leaks to the outside because of the finite magnetic permeability of the yoke, the magnitude of the magnetic force, structural reasons, or the like.

FIGS. 6A and 6C illustrate, as a typical example, the magnetic field (or magnetic field line) F1, which is the magnetic flux leakage generated from the outer peripheral surface 122A of the magnet 122, exposed from the top plate 124, to the center plate 128 through the surface of the top plate 124. The magnetic flux leakage generated from the magnet 122 can be generated from the surface of the center plate 128 or the side surface of the magnet 122, in addition to the path of the magnetic field F1.

The angle (direction) of the magnetic field F1 is inclined to approach the horizontal direction (X direction) at a position closer to the surface of the top plate 124/center pole 128. The angle (direction) of the magnetic field F1 is inclined to approach the vertical direction (Z direction) at a position farther away from the surface of the top plate 124/center pole 128. In other words, the magnetic field F1 close to the surface advances with an angle as if drawing a small circle, and the magnetic field F1 far from the surface advances with an angle as if drawing a large circle.

FIG. 6B is a diagram schematically illustrating a magnetic flux vector H1 passing through the XZ plane, which is the detection surface of the GMR sensor 200 in the approaching state illustrated in FIG. 6A. The GMR sensor 200 detects the angle of the magnetic flux vector H1 passing through the XZ plane.

FIG. 6C is a cross-sectional diagram in which the GMR sensor 200 moves away from the magnetic circuit 120. FIG. 6D is a diagram schematically illustrating a magnetic flux vector H2 passing through the XZ plane, which is the detection surface of the GMR sensor 200 in the moved-away state illustrated in FIG. 6C. The magnetic flux vector H2 passing through the GMR sensor 200 is inclined to approach the Z direction (vertical direction) relative to the magnetic flux vector H1 illustrated in FIG. 6B. The angle change of the magnetic flux vector H2 is detected by the GMR sensor 200.

When an audio signal is applied to the voice coil 170 to vibrate the diaphragm 130, the GMR sensor 200 disposed on the bobbin 150 vibrates along with the diaphragm 130, thereby changing the relative position between the GMR sensor 200 and the magnetic circuit 120 in synchronization with the vibration. The GMR sensor 200 detects the angles of the magnetic flux leakage vectors H1 and H2 corresponding to the change in the relative position. The detected signal is fed back to an amplifier or the like.

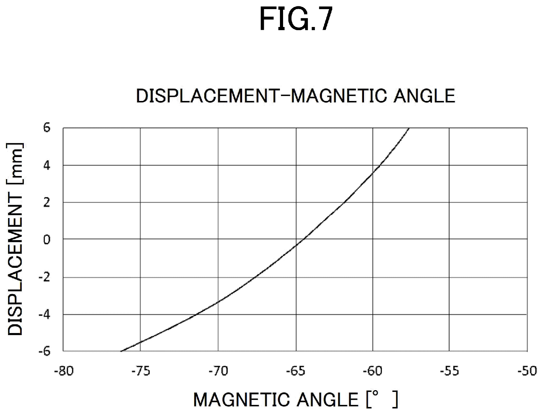

FIG. 7 is a graph illustrating a simulation result of a displacement-magnetic angle obtained using the displacement detector of the present embodiments. In FIG. 7, the vertical axis indicates the displacement [mm] of the GMR sensor, and the horizontal axis indicates the magnetic angle [°]. A magnetic angle of "-80°" indicates that the magnetic flux leakage is close to horizontal (parallel to the X-axis), and a displacement of "0" corresponds to the position of the GMR sensor 200 disposed when the diaphragm is not moving. The displacement in the negative direction indicates approaching of the GMR sensor 200 to the magnetic circuit 120. As is clear from the graph of FIG. 7, when the amplitude of the GMR sensor 200 is in the range of -6 mm to +6 mm, the magnetic angle changes in the range of -76.3° to -57.6°. This indicates that the relationship between the displacement and the magnetic angle is unambiguously determined.

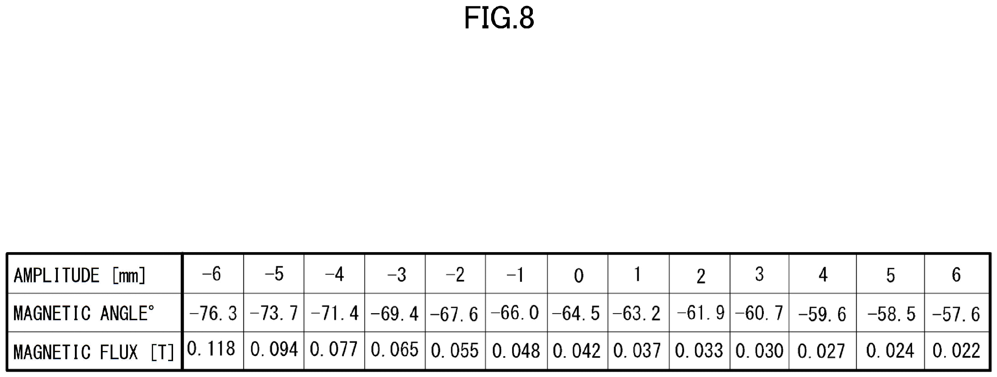

FIG. 8 is a simulation result of a magnitude [T] of the magnetic flux leakage corresponding to the displacement-magnetic angle illustrated in FIG. 7. When the position of the GMR sensor 200 disposed is too far away from the magnetic circuit 120, the detection level is too small to perform good detection of a magnetic angle. As shown in the simulation result, the magnitude [T] of the magnetic flux detected by the GMR sensor 200 is in the range of 20 mT to 120 mT. This range can be guaranteed for the detection operation of the GMR sensor 200.

According to the present embodiments, since the second magnet for displacement detection is not required unlike in the related art, it is possible to increase the production efficiency in the assembly step of the speaker and reduce the cost of the speaker.

In the above embodiments, the GMR sensor is attached to the outer peripheral portion of the bobbin. However, the GMR sensor may be attached to the vibrator rather than the bobbin if the angle of the magnetic flux leakage from the first magnet can be detected. In the above embodiments, the GMR sensor is exemplified as the magnetic sensor configured to detect the magnetic angle. Instead, a TMR sensor can be used.

Although the embodiments of the present disclosure have been described in detail, the present disclosure is not limited to the specific embodiments, and various modifications may be possible within the scope of the claims.

According to the present disclosure, the angle of the magnetic flux leakage generated in the magnetic circuit is detected by the magnetic angle sensor attached to the vibrator. This configuration does not need a magnet dedicated to displacement detection of the vibrator unlike in the related art. This can increase the production efficiency in the assembly step of the speaker. Further, since such a dedicated magnet is unnecessary, it is possible to reduce the cost of the speaker.

## Claims

1. A speaker, comprising:
a vibrator including a diaphragm;
a magnetic circuit including a magnet configured to drive the diaphragm; and
a magnetic angle sensor attached to the vibrator and configured to detect an angle of magnetic flux leakage generated in the magnetic circuit.

2. The speaker according to claim 1, wherein
the vibrator includes a bobbin around which a bobbin coil is wound, and
the magnetic angle sensor is disposed at an outer peripheral portion of the bobbin.

3. The speaker according to claim 1 or 2, wherein
the magnetic angle sensor is disposed such that a detection surface of the magnetic angle sensor is aligned with a plane on which a vibration direction of the vibrator and a direction of the magnetic flux leakage are expressed.

4. The speaker according to one of claims 1 to 3, wherein
the magnetic angle sensor is disposed at a position where a magnitude of the magnetic flux leakage is in a fixed range.

5. The speaker according to one of claims 1 to 4, wherein
the magnetic circuit further includes:
a top plate disposed on the magnet and having a ring shape, and
a center pole, and wherein
the magnetic flux leakage is generated on a surface of the top plate.

6. The speaker according to one of claims 1 to 5, wherein
the magnetic angle sensor is a giant magnetoresistance sensor.
